# EUROPEAN PATENT APPLICATION

(11) **EP 4 491 372 A1**
(43) Date of publication of application: **15.01.2025**
(21) Application number: 23766399.2
(22) Date of filing: 08.02.2023
(51) Int. Cl.: B29C 55/02

(54) **AIR FLOW CONTROL DEVICE AND METHOD FOR PRODUCING STRETCHED FILM**

(30) Priority: 07.03.2022 JP 2022034281
(71) Applicant: Toray Industries, Inc., Tokyo 103-8666 (JP)
(72) Inventor: MAKI, Akihisa, Otsu-shi, Shiga 520-8558 (JP); SHOJI, Hiroki, Otsu-shi, Shiga 520-8558 (JP)
(74) Representative: Hoefer & Partner Patentanwälte mbB
(86) International application number: PCT/JP2023/004223
(87) International publication number: WO 2023/171219

(57) **Abstract**

An airflow control apparatus of the present invention is an airflow control apparatus that is provided adjacent to an upstream side of an entrance of a tenter oven in a film conveyance direction and/or to a downstream side of an exit of the tenter oven in the film conveyance direction, the tenter oven including the entrance into which a film is conveyed and the exit from which the film is conveyed, the airflow control apparatus including a blowoff nozzle, upstream-side exhaust mechanisms, and downstream-side exhaust mechanisms, in which adjustment is performed such that, when an airflow flowing from the upstream side toward the downstream side in the film conveyance direction or from the downstream side toward the upstream side in the film conveyance direction inside the airflow control while exhaust of air from the upstream-side exhaust mechanisms and the downstream-side exhaust mechanisms and blowoff of air from the blowoff nozzle are stopped is an airflow when stopping, each of an amount of air exhausted from the upstream-side exhaust mechanisms and an amount of air exhausted from the downstream-side exhaust mechanisms is greater than zero, and the amount of air exhausted from the exhaust mechanisms positioned on a side into which the airflow when stopping flows, out of the upstream-side exhaust mechanisms and the downstream-side exhaust mechanisms, is greater than the amount of air exhausted from the other exhaust mechanisms.

## Description

### Field

The present invention relates to an airflow control apparatus and a method for manufacturing a stretched film.

### Background

As methods for manufacturing stretched films made of thermoplastic resin, a sequential biaxial stretching method and a simultaneous biaxial stretching method are known. In the sequential biaxial stretching method, an unstretched film made of thermoplastic resin is stretched in a longitudinal direction thereof to obtain a uniaxially stretched film, and the obtained uniaxially stretched film is put into a tenter oven and is stretched in the tenter oven in a width direction thereof. In the simultaneous biaxial stretching method, an unstretched film made of thermoplastic resin is put into a tenter oven and is stretched in the tenter oven in a longitudinal direction and a width direction thereof simultaneously.

Stretched films made of thermoplastic resin are widely used for various industrial material purposes such as packaging purpose. Among such films, sequential biaxially stretched films made of polyester, polyolefin, or polyamide resin are widely used in purposes where unstretched films are not usable, due to excellent mechanical characteristics, thermal characteristics, electrical characteristics, and the like, and the demand for the sequential biaxially stretched films has been increasing.

A problem with a tenter oven for manufacturing a stretched film made of thermoplastic resin is a phenomenon in which circulation of air is not completed in a chamber constituting the tenter oven such that air with a different set temperature flows into the chamber, outside air from the outside of the tenter oven flows into the oven, or air in the chamber of the tenter oven is blown out of the oven. All of such phenomena are phenomena in which air flows along a conveyance direction of the film, and such a flow of air is referred to as a machine direction (MD) flow. The MD flow is caused by an airflow that accompanies the film when the film is conveyed, a difference between an amount of heated air supplied into the tenter oven and an amount of air exhausted from the tenter oven, and the like.

If the MD flow is generated, incoming air with a different temperature flowing from the outside of the chamber is mixed with heated air in the chamber while flowing near the film, and thus, the efficiency of heating the film is uneven, and extensive temperature unevenness occurs in the film. In the tenter oven, at least one process is performed among a preheating process of increasing the film to a desired temperature, a stretching process of extending the film to a desired width, a heat fixing process of performing thermal treatment to the film at a desired temperature, and a cooling process of cooling the film at a desired temperature. If the temperature unevenness occurs in the film during any of such process, the temperature unevenness results in thickness unevenness and characteristic unevenness of the film, and the product quality deteriorates. In addition to the deterioration of the product quality, the film may be torn in the tenter oven, and productivity may be reduced.

As a technique for restraining the MD flow with a different ambient temperature from flowing into and out of an adjacent chamber, Patent Literature 1 discloses a technique that blows out air toward a film surface with a blowoff nozzle inside an airflow control apparatus provided adjacent to the tenter oven and blocks the MD flow with an air curtain. Patent Literature 2 discloses a technique that uses an injection nozzle provided in an intermediate chamber of a tenter oven to block accompanying air flowing from a heating zone into the intermediate chamber along with a film.

### Citation List

### Patent Literature

Patent Literature 1: WO 2017/115654 A
Patent Literature 2: JP 2003-39543 A

### Summary

### Technical Problem

In the method disclosed in Patent Literature 1, the MD flow flowing from a tenter oven entrance or a tenter oven exit into the airflow control apparatus can be blocked, but the method is based on an idea that a heated perpendicular jet flow is blown on the film to block the MD flow, and in particular, when the MD flow is large, or the like, it is necessary to increase a velocity of air blown out from the blowoff nozzle. Therefore, while maximizing the effect of the airflow control apparatus, there is room for improvement in reducing energy required for heating hot air blown out from the blowoff nozzle.

In the method disclosed in Patent Literature 2, even if the MD flow flowing in a film conveyance direction can be blocked, an MD flow flowing in an opposite direction to the film conveyance direction (reverse MD flow) may not be blocked, and accompanying air flows into an adjacent chamber along with air blown out of a tilted nozzle that is deflected by the reverse MD flow and is reduced in blocking ability, causing occurrence of temperature unevenness of the tenter oven that is a problem to be solved.

The present invention has been accomplished in view of the above-described problems, and provides an airflow control apparatus capable of restraining air from flowing into and from a tenter oven and reducing energy required for keeping the tenter oven at a desired temperature or energy required for heating air blown out from a blowoff nozzle.

### Solution to Problem

The present invention to solve the above-described problem provides an airflow control apparatus that is provided adjacent to an upstream side of an entrance of a tenter oven in a film conveyance direction and/or to a downstream side of an exit of the tenter oven in the film conveyance direction, the tenter oven including the entrance into which a film is conveyed and the exit from which the film is conveyed, the airflow control apparatus including: inside the airflow control apparatus, at least one pair of blowoff nozzles configured to blow out air to the film being conveyed, the one pair of blowoff nozzles facing each other with a film passing surface sandwiched between the one pair of blowoff nozzles; at least one pair of upstream-side exhaust mechanisms configured to exhaust the air inside the airflow control apparatus, the one pair of upstream-side exhaust mechanisms being provided on the upstream side in the film conveyance direction with respect to the one pair of blowoff nozzles to face each other with the film passing surface sandwiched between the one pair of upstream-side exhaust mechanisms; and at least one pair of downstream-side exhaust mechanisms configured to exhaust the air inside the airflow control apparatus, the one pair of downstream-side exhaust mechanisms being provided on the downstream side in the film conveyance direction with respect to the one pair of blowoff nozzles to face each other with the film passing surface sandwiched between the one pair of downstream-side exhaust mechanisms, wherein the upstream-side exhaust mechanisms and the downstream-side exhaust mechanisms are set such that, when an airflow flowing from the upstream side toward the downstream side in the film conveyance direction or from the downstream side toward the upstream side in the film conveyance direction inside the airflow control apparatus while exhaust of air from the upstream-side exhaust mechanisms and the downstream-side exhaust mechanisms and blowoff of air from the blowoff nozzle are stopped is an airflow when stopping, each of an amount of air exhausted from the upstream-side exhaust mechanisms and an amount of air exhausted from the downstream-side exhaust mechanisms is greater than zero, and the amount of air exhausted from the exhaust mechanisms positioned on a side into which the airflow when stopping flows, of the upstream-side exhaust mechanisms and the downstream-side exhaust mechanisms, is greater than the amount of air exhausted from the other exhaust mechanisms.

In the airflow control apparatus according to present invention, it is preferable that the upstream-side exhaust mechanisms and the downstream-side exhaust mechanisms are adjusted such that a total amount of air exhausted from the upstream-side exhaust mechanisms and the downstream-side exhaust mechanisms is greater than an amount blown out from the blowoff nozzle.

In the airflow control apparatus according to present invention, it is preferable that the blowoff nozzles are configured to blow out the air in a direction tilted toward the side into which the airflow when stopping flows, with respect to a direction perpendicular to the film passing surface from the blowoff nozzles.

In the airflow control apparatus according to present invention, it is preferable that the blowoff nozzles include a mechanism configured to adjust a blowoff direction of the air.

The present invention provides a method for manufacturing a stretched film, the method including: passing a film through each of a tenter oven and an airflow control apparatus, the airflow control apparatus being provided adjacent to an upstream side of an entrance of the tenter oven in a film conveyance direction and/or to a downstream side of an exit of the tenter oven in the film conveyance direction; at the airflow control apparatus, exhausting air in the airflow control apparatus with the upstream-side exhaust mechanisms and the downstream-side exhaust mechanisms while blowing air toward a running film from the blowoff nozzles; and at the tenter oven, heating and stretching the running film.

### Advantageous Effects of Invention

According to the present invention, it is possible to restrain air with a different temperature from flowing from the outside of the tenter oven into the tenter oven or to restrain air flowing from the tenter oven, and to reduce energy required for keeping the tenter oven at a desired temperature or to reduce energy required for heating air blown out from the blowoff nozzle.

### Brief Description of Drawings

FIG. 1 is a diagram illustrating a schematic configuration of a film manufacturing apparatus including an airflow control apparatus according to an embodiment of the present invention.
FIG. 2 is a diagram illustrating a schematic configuration of a film manufacturing apparatus including an airflow control apparatus according to another embodiment of the present invention.
FIG. 3 is a cross-sectional view of an airflow control apparatus used in an example of the present invention in a film conveyance direction.

### Description of Embodiments

Hereinafter, a mode for carrying out the present invention will be described in detail with the drawings. Note that the present invention is not limited to the following embodiments. The drawings referred to in the following description only schematically illustrate shapes, sizes, and positional relationships to such an extent that the contents of the present invention can be understood. That is, the present invention is not limited only to the shapes, sizes, and positional relationships exemplified in the drawings. In the description of the drawings, same portions are represented by same reference signs.

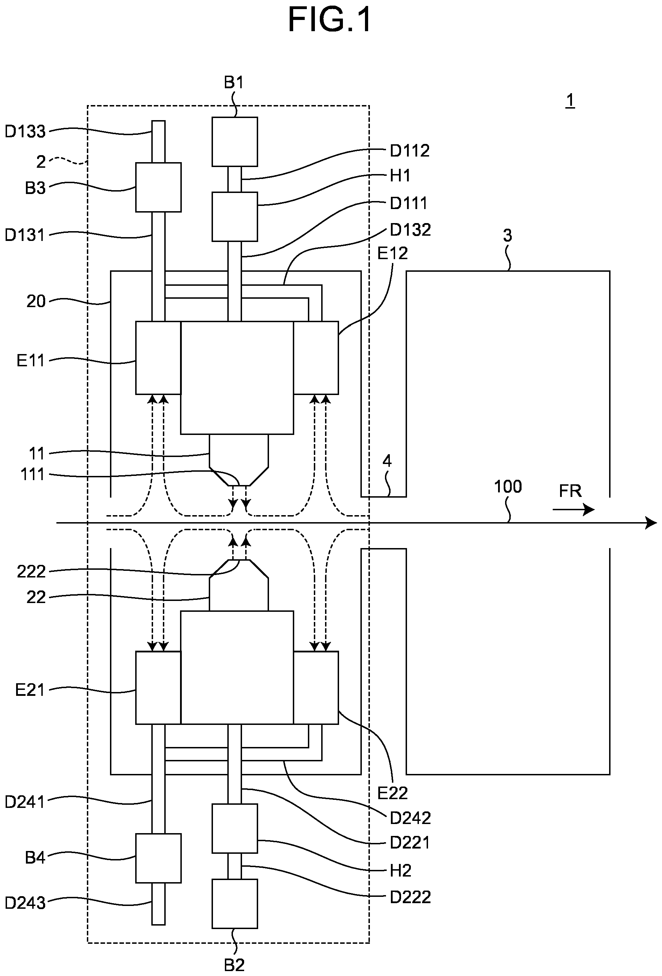

FIG. 1 is a diagram illustrating a schematic configuration of a film manufacturing apparatus including an airflow control apparatus according to an embodiment of the present invention. A film manufacturing apparatus 1 illustrated in FIG. 1 includes an airflow control apparatus 2 and a tenter oven 3. The film manufacturing apparatus 1 is a manufacturing apparatus for stretched films that employs a sequential biaxial stretching method or a simultaneous biaxial stretching method, and puts a film 100 made of thermoplastic resin into the tenter oven 3 and stretches the film 100 in at least one of a longitudinal direction and a width direction in the tenter oven 3. In FIG. 1, the longitudinal direction of the film 100 is a conveyance direction FR of the film 100 and corresponds to a left-right direction in the drawing. The width direction of the film 100 (film width direction) is a direction perpendicular to the longitudinal direction and a thickness direction (an up-down direction on the paper surface) of the film 100, and corresponds to a direction perpendicular to the paper surface. FIG. 1 illustrates an example where the film 100 matches a film passing surface.

In general, the tenter oven 3 has at least one process of a preheating process of increasing the film 100 to a desired temperature, a stretching process of extending the film 100 to a desired width, a heat fixing process of performing heat treatment to the film 100 at a desired temperature, and a cooling process of cooling the film 100 to a desired temperature, and the temperature of the film 100 in each process can be adjusted by blowing air heated in advance to a desired temperature on the film via a blowoff nozzle provided in the tenter oven 3. The film 100 that can be applied to the present invention is not particularly limited, and a known thermoplastic resin film that is heated and stretched in the tenter oven 3 can be applied.

The airflow control apparatus 2 has a box-shaped body 20 and is provided adjacent to the tenter oven 3 with respect to the conveyance direction of the film 100. The box-shaped body 20 has one end in the conveyance direction FR of the film 100 connected to a connecting section 4, and has the other end in which an opening is formed for conveying the film 100 from the outside or to the outside. Inside the box-shaped body 20, a blowoff nozzle 11 and exhaust mechanisms E11 and E12 are provided to face one surface (in FIG. 1, an upper surface) of the film 100, and a blowoff nozzle 22 and exhaust mechanisms E21 and E22 are provided to face the other surface (in FIG. 1, a lower surface) of the film 100. The blowoff nozzles 11 and 22 blow out air to the surfaces of the film 100 facing the blowoff nozzles 11 and 22. The exhaust mechanisms E11, E12, E21, and E22 suck air flowing inside the box-shaped body 20. In FIG. 1, although the blowoff nozzles 11 and 22 and the exhaust mechanisms E11, E12, E21, and E22 are illustrated as having an integrated configuration, both may be provided to be spaced with each other.

In the airflow control apparatus 2, blowers B1 and B2, heat exchangers H1 and H2, and ducts D111, D112, D221, and D222 are provided as supply sources of air to the blowoff nozzles 11 and 22. As suction sources of air from the exhaust mechanisms E11, E12, E21, and E22, blowers B3 and B4 and ducts D131, D132, D133, D241, D242, and D243 are provided. To adjust amounts of air sucked from the exhaust mechanisms E11 and E12, air volume adjustment mechanisms (not illustrated) are provided in the ducts D131 and D132. Similarly, to adjust amounts of air sucked from the exhaust mechanisms E21 and E22, air volume adjustment mechanisms (not illustrated) are provided in the ducts D241 and D242. The air volume adjustment mechanisms that are provided in the ducts D131 and D132 and the ducts D241 and D242 are not particularly limited, and are, for example, dampers, valves, or orifices.

A flow of air blown out from the blowoff nozzles 11 and 22 will be described with the blowoff nozzle 22 as a representative. Hot air supplied to the blowoff nozzle 22 via the blower B2 and the heat exchanger H2 is blown from an air blowoff opening portion 222 toward the film 100. The air blown on the film collides with the film 100, is redirected to an upstream side and a downstream side in the film conveyance direction to be turned into return air, and is sucked from the exhaust mechanism E21 and the exhaust mechanism E22. Similarly, air blown out from an air blowoff opening portion 111 of the blowoff nozzle 11 is also sucked from the exhaust mechanism E11 and the exhaust mechanism E12.

In FIG. 1, the ducts that supply air to be blown out to the blowoff nozzles 11 and 22 and the ducts that discharge the air sucked from the exhaust mechanisms E11, E12, E21, and E22 are not connected, but the ducts of the blowoff nozzles 11 and 22 and the ducts of the exhaust mechanisms E11, E12, E21, and E22 may be connected by other ducts (not illustrated) or the like to supply part of the air sucked from the exhaust mechanisms E11, E12, E21, and E22 to the blowoff nozzles 11 and 22. In particular, part of the air sucked from the exhaust mechanisms E12 and E22 includes hot air of the tenter oven 3, by suppling the hot air to the duct lines of the blowoff nozzles 11 and 22, it is possible to reduce thermal loss, and to reduce energy required for heating the air blown out from the blowoff nozzles 11 and 22. Here, air volume adjustment mechanisms are desirably provided in the ducts connecting the blowoff nozzles 11 and 22 and the exhaust mechanisms E11, E12, E21, and E22 to obtain a desired air volume.

In the present embodiment, the amounts of air sucked from the exhaust mechanisms E11, E12, E21, and E22 are adjusted to be greater than zero. As described above, as the air that collides with the film 100 is redirected to the upstream side and the downstream side in the film conveyance direction, to suck the return air, it is important that an amount of air exhausted from the upstream-side exhaust mechanisms E11 and E21 and an amount of air exhausted from the downstream-side exhaust mechanisms E12 and E22 are set to be greater than zero. When any amount of exhausted air is zero, it is not possible to suck the return air into the upstream-side exhaust mechanisms E11 and E21 or the downstream-side exhaust mechanisms E12 and E22, and undesirably, the air blown out of the blowoff nozzles 11 and 22 flows into the tenter oven 3 via the connecting section 4 to cause the occurrence of temperature unevenness in the tenter oven 3 or the hot air of the blowoff nozzles 11 and 22 leaks from the airflow control apparatus 2 to an outer space to deteriorate a working environment of the outer space.

In addition, the amounts of exhausted air from the exhaust mechanisms E11, E12, E21, and E22 are adjusted such that, when an airflow flowing from the upstream side toward the downstream side in the conveyance direction or an airflow flowing from the downstream side toward the upstream side in the film conveyance direction inside the airflow control apparatus 2 while the exhaust of the air from the exhaust mechanisms E11, E12, E21, and E22 and the blowoff of the air from the blowoff nozzles 11 and 21 are stopped is an airflow when stopping, the amount of air exhausted from the exhaust mechanisms positioned on a side into which the airflow flows is greater than the amount of air exhausted from the other exhaust mechanisms. Accordingly, since not only the return air but also the MD flow flowing into the airflow control apparatus 2 are sucked, it is possible to restrain the occurrence of temperature unevenness of the tenter oven 3 or leakage of the hot air of the tenter oven 3 to the outer space. The amount of air exhausted from the exhaust mechanisms on a side into which the airflow flows is adjusted to be greater than the amount of air exhausted from the other exhaust mechanisms, so that it is possible to tilt the air blown out from the blowoff nozzles 11 and 22 toward the side into which the airflow flows, and thus, return air on a side countering the MD flow becomes strong and an MD flow blocking effect is further increased.

The total amount of air exhausted from the exhaust mechanisms E11, E12, E21, and E22 is desirably adjusted to be greater than the amount of air blown out from the blowoff nozzles 11 and 22. Accordingly, the return air is easily sucked from the exhaust mechanisms E11, E12, E21, and E22, and it is possible to restrain the air blown out of the blowoff nozzles 11 and 22 from flowing into the tenter oven 3 via the connecting section 4 to cause the occurrence of temperature unevenness in the tenter oven 3 or to restrain the hot air of the blowoff nozzles 11 and 21 from leaking from the airflow control apparatus 2 to the outer space to deteriorate the working environment. In addition, since an MD flow that occurs due to a difference in pressure between the outer space and the tenter oven 3 is sucked from the exhaust mechanisms E11, E12, E21, and E22, it is possible to restrain the MD flow from flowing into the tenter oven 3 to cause the occurrence of temperature unevenness in the tenter oven 3 or to restrain the hot air of the tenter oven 3 from leaking to the outer space to deteriorate the working environment.

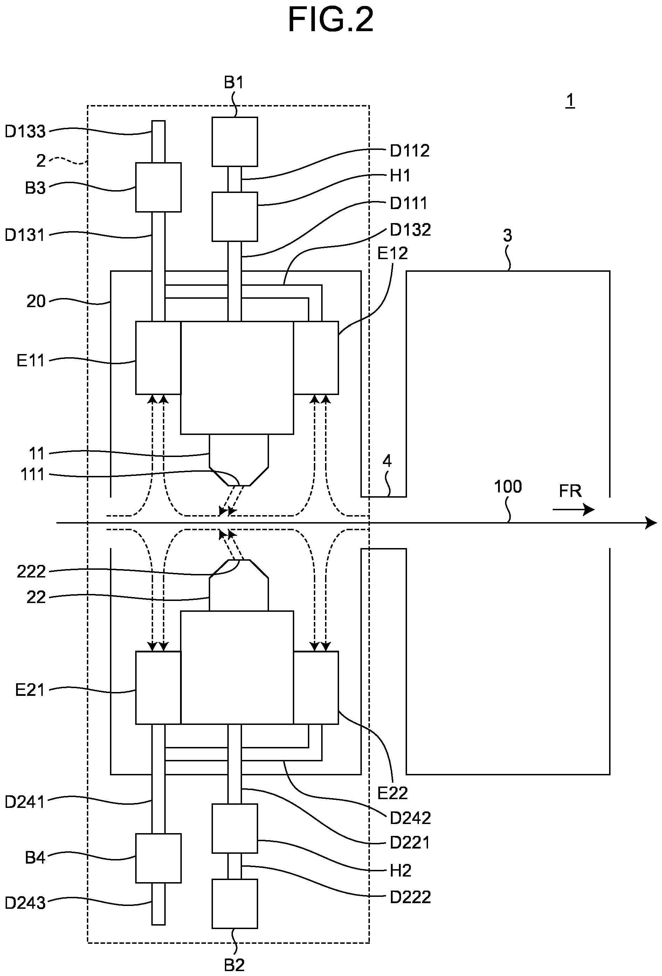

The air blown out from the blowoff nozzles 11 and 22 toward the film 100 may be blown out while being tilted toward the side into which the airflow when stopping flows, with respect to a direction perpendicular to the film 100 (film passing surface) (for example, see FIG. 2). Accordingly, since the return air on the side countering the MD flow can become strong, the MD flow blocking effect is further increased. Here, as the blowoff nozzles 11 and 22, a tilted nozzle that controls the shape of the blowoff opening or the flow of air inside the nozzle to tilt and blow out air toward the side into which the airflow flows or a mechanism that can adjust a blowoff direction of air is desirably provided. To control the shape of the blowoff opening or the flow of air inside the nozzle, for example, a mechanism that adjusts a gap of the blowoff opening or a slide mechanism that moves a position of a nozzle internal structure, a valve, or a damper may be provided. The mechanism that can adjust the blowoff direction of air may adjust angles of the blowoff nozzles 11 and 22 using a general mechanical element, and is made of, for example, any one of a stage, a shaft, a gear, a joint, a hinge, a rail, a pin, a jack, an air cylinder, or a hydraulic cylinder, or a combination thereof. When the film 100 is being manufactured, the inside of the airflow control apparatus 2 and the tenter oven 3 is increased in temperature to heat the film 100 to a desired temperature. Given this, it is preferable that the air blowoff direction can be adjusted from the outer space of the airflow control apparatus.

Although a pair of blowoff nozzles 11 and 22 and exhaust mechanisms E11, E12, E21, and E22 facing each other are effective, effectiveness can be improved by providing a plurality of pairs of the blowoff nozzles and the exhaust mechanisms. In particular, the direction of the airflow flowing inside the airflow control apparatus 2 changes depending on a conveyance speed of the film 100, a difference in pressure between the tenter oven 3 and the outer space, that is, a difference between an air volume supplied to the tenter oven 3 and an air volume exhausted from the tenter oven 3, or air conditioning of the outer space, and thus, a blowoff nozzle is not limited to a blowoff nozzle including the above-described mechanism that can adjust the blowoff direction of air, and at least one blowoff nozzle that tilts and blows out air to the upstream side of the film 100 in the conveyance direction FR and at least one blowoff nozzle that tilts and blows out air to the downstream side may be provided, and a blowoff nozzle that blows out air toward the side into which the airflow flows after the direction of the airflow is detected may be selected and used.

The present invention provides a device that separates an entrance and/or an exit of the tenter oven 3 from the airflow outside a chamber of the tenter oven 3, and performs airflow control. Therefore, when the airflow control apparatus 2 is provided adjacent to the entrance of the tenter oven 3 on the upstream side in the film conveyance direction, the temperature of the air blown out from the blowoff nozzles 11 and 22 is desirably higher than the temperature of the film 100 at the entrance of the airflow control apparatus 2. Accordingly, the film 100 is restrained from being excessively cooled to cause the occurrence of failure in the preheating process in the tenter oven 3. When the airflow control apparatus 2 is provided adjacent to the exit of the tenter oven 3 on the downstream side in the film conveyance direction, the temperature of the air blown out from the blowoff nozzles 11 and 22 is desirably lower than the temperature of the film 100 at the exit of the tenter oven 3. Accordingly, the film 100 is restrained from being heated to cause the occurrence of failure in a downstream process of the tenter oven 3. The temperature of the air blown out from the blowoff nozzles 11 and 22 is desirably equal to or lower than a glass transition temperature of the film 100. Accordingly, change in crystal structure of thermoplastic resin is avoided.

### Examples

Hereinafter, the present invention will be described in more detail with examples. The examples are not intended to limit the interpretation of the present invention in any way.

First, an evaluation method of the effects of the present invention will be described. A numerical analysis model that models the airflow control apparatus and the chamber included in the tenter oven body of the present invention is created, and the numerical analysis model is numerically calculated to evaluate airflow control performance.

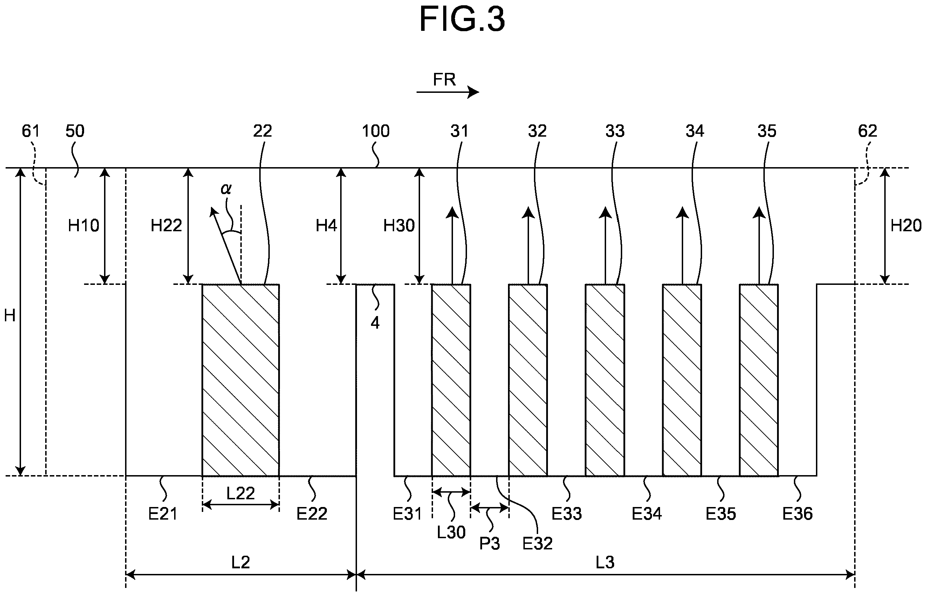

FIG. 3 is a cross-sectional view of an airflow control apparatus used in the example of the present invention in the film conveyance direction. FIG. 3 illustrates a configuration of a lower half part of the airflow control apparatus 2 and the tenter oven 3 out of upper and lower half parts separated by a film conveyance surface as a boundary. To save calculation resources in calculating internal airflows of the airflow control apparatus 2 and the tenter oven 3, it was assumed that the airflow control apparatus 2, the tenter oven 3, and an outer space 50 have a shape symmetrical in an up-down direction via the film 100, and only the lower half part was calculated.

The dimensions of each structure were set as follows. A length L2 of the airflow control apparatus 2 in the film conveyance direction was set to 450 mm, a height H was set to 1000 mm, and the blowoff nozzle 22 was provided inside the airflow control apparatus 2. A length L22 of the blowoff nozzle 22 in the film conveyance direction was set to 150 mm, a distance H22 between the blowoff nozzle 22 and the film 100 was set to 150 mm, and a slit having a gap of 30 mm in the film conveyance direction was provided as a blowoff opening. Lengths of the exhaust mechanisms E21 and E22 in the film conveyance direction were set to be equal to each other. A length L3 of the tenter oven 3 in the film conveyance direction was set to 1500 mm, and blowoff nozzles 31 to 35 were provided inside the tenter oven 3. A length L30 of the blowoff nozzles 31 to 35 in the film conveyance direction was set to 100 mm, a pitch P3 was set to 150 mm, a distance H30 between the blowoff nozzles 31 to 35 and the film 100 was set to 150 mm, and holes having a diameter of 18 mm were provided in three columns in the film conveyance direction as a blowoff opening. An opening having a height H10 = H20 = 150 mm was provided at an entrance of the airflow control apparatus 2 and the exit of the tenter oven 3, and a length of the film 100 in a width direction was set to 500 mm.

In the numerical analysis, steady calculation was performed using "STAR-CCM" (manufactured by IDAJ Co., Ltd.), which is commercially available thermal fluid analysis software. A k-ε turbulence model was used for handling turbulence, and a wall law was used for handling a turbulence boundary layer near a wall. The above-described software analyzed a Navier-Stokes equation, which is a motion equation of a fluid, by a finite volume method. Of course, any thermal fluid analysis software may be used as long as a similar analysis can be performed.

As boundary conditions of an analysis space, an outer boundary 61 of the outer space 50 and an inner boundary 62 of the tenter oven 3 were set as a pressure boundary, the outer boundary 61 of the outer space 50 was set to atmospheric pressure (0.1 MPa), and the inner boundary 62 of the tenter oven was set to atmospheric pressure -5 Pa. As boundary conditions of the blowoff nozzles 31 to 35, a boundary condition under which air at 140°C is blown out from the opening portion at an air velocity of 15 m/sec, and the same amount of air as the air volume blown out from the blowoff nozzles 31 to 35 is exhausted from exhaust surface E31 to 36 of the tenter oven. A conveyance speed of the film 100 was set to 150 m/min.

As an index of the effectiveness of the airflow control apparatus 2, an average temperature of the exhaust surface E31 positioned upstream of the tenter oven 3 in the film conveyance direction FR was used. While the blowoff of the entire airflow control apparatus 2 and the exhaust mechanisms are stopped, the MD flow flowed at 1.6 m/sec in the film conveyance direction, and the average temperature of the exhaust surface E31 was 30°C (see Comparative Example 1).

### (Example 1)

In the airflow control apparatus illustrated in FIG. 3, an air velocity of the air blown out of the blowoff nozzle 22 was set to 15 m/sec, an air temperature was set to 30°C, a tilt angle α was set to 0 deg, the total amount of air exhausted from the exhaust mechanisms E21 and E22 was the same amount as the air volume blown out from the blowoff nozzle 22, and an exhaust ratio of the exhaust mechanisms E21 and E22 was set to E21 : E22 = 75% : 25%. Under such conditions, the average temperature of the exhaust surface E31 was 92°C. With the airflow control apparatus 2, the MD flow flowing from the outer space 50 was blocked and was restrained from flowing into the tenter oven 3. On the other hand, since the MD flow flowing into the tenter oven 3 is sucked into the exhaust mechanism E21 along with the air blown out of the blowoff nozzle 22, it was understood that part of the air (air temperature of 30°C) blown out of the blowoff nozzle 22 flowed into the tenter oven 3 and the average temperature of the exhaust surface E31 was decreased.

### (Example 2)

In Example 2, the same numerical analysis model as in Example 1 was used, and the same parameters as in Example 1 were set, except that the total amount of air exhausted from the exhaust mechanisms E21 and E22 was set to an air volume 1.2 times the air volume blown out from the blowoff nozzle 22. Under such conditions, the average temperature of the exhaust surface E31 was 134°C. With the airflow control apparatus 2, the MD flow flowing from the outer space 50 was blocked and the air blown out of the blowoff nozzle 22 was exhausted from the exhaust mechanisms E21 and E22, so that the air blown out of the blowoff nozzle 22 is restrained from flowing into the tenter oven 3 and the average temperature of the exhaust surface E31 was increased.

### (Example 3)

In Example 3, the same numerical analysis model as in Example 1 was used, and the same parameters as in Example 1 were set, except that the tilt angle α of the blowoff nozzle 22 was set to 10 deg. Under such conditions, the average temperature of the exhaust surface E31 was 137°C. With the airflow control apparatus 2, the MD flow flowing from the outer space 50 was blocked, and the air blown out of the blowoff nozzle 22 was restrained from flowing into the tenter oven, such that the average temperature of the exhaust surface 31 was increased.

### (Example 4)

In Example 4, the same numerical analysis model as in Example 1 was used, and the same parameters as in Example 1 were set, except that the tilt angle α of the blowoff nozzle 22 was set to 10 deg, and the total amount of air exhausted from the exhaust mechanisms E21 and E22 was set to an air volume 1.2 times the air volume blown out from the blowoff nozzle 22. Under such conditions, the average temperature of the exhaust surface 31 was 140°C. With the airflow control apparatus 2, the MD flow flowing from the outer space 50 was blocked, and the air blown out of the blowoff nozzle 22 was exhausted from the exhaust mechanisms E21 and E22, so that the air blown out of the blowoff nozzle 22 was restrained from flowing into the tenter oven 3 and temperature unevenness did not occur in the tenter oven 3.

### (Comparative Example 1)

In Comparative Example 2, the same numerical analysis model as in Example 1 was used, and the same parameters as in Example 1 were set, except that the air velocity of the blowoff nozzle 22 was set to 0 m/sec, and the amount of air exhausted from the exhaust mechanisms E21 and E22 was set to zero. Under such conditions, the average temperature of the exhaust surface E31 was 30°C.

### (Comparative Example 2)

In Comparative Example 2, the same numerical analysis model as in Example 1 was used, and the same parameters as in Example 1 were set, except that the amount of air exhausted from the exhaust mechanism E22 was set to zero. Under such conditions, the average temperature of the exhaust surface E31 was 79°C. With the airflow control apparatus 2, the MD flow flowing from the outer space 50 was blocked and restrained from flowing into the tenter oven 3, but it was understood that the air volume of the air (air temperature of 30°C) blown out of the blowoff nozzle 22 flowing into the tenter oven 3 was greater than that in Example 1 as the amount of air exhausted from the exhaust mechanism E22 was set to zero, and the average temperature of the exhaust surface E31 was further decreased.

### (Comparative Example 3)

In Comparative Example 3, the same numerical analysis model as in Example 1 was used, and the same parameters as in Example 1 were set, except that the exhaust ratio of the exhaust mechanisms E21 and E22 was set to E21 : E22 = 50% : 50%. Under such conditions, the average temperature of the exhaust surface E31 was 61°C. With the airflow control apparatus 2, the MD flow flowing from the outer space 50 was blocked and restrained from flowing into the tenter oven 3, but the exhaust ratio from the exhaust mechanism E21 was decreased, so that the air volume of the air (air temperature of 30°C) blown out from the blowoff nozzle 22 flowing to the downstream side in the film conveyance direction was increased, and thus it was understood that the air volume of the air blown out of the blowoff nozzle 22 flowing into the tenter oven 3 was increased compared to Example 1, and the average temperature of the exhaust surface E31 was further decreased.

From the results of Example 1 and Comparative Examples 1 to 3, it was understood that both the air volume of the upstream-side exhaust mechanisms and the air volume of the downstream-side exhaust mechanisms of the MD flow were set to be greater than zero, and the air volume of the exhaust mechanisms positioned on the upstream side of the MD flow was set to be greater than the air volume of the exhaust mechanisms positioned on the downstream side, so that air with a different set temperature was restrained from flowing into the tenter oven, and temperature unevenness of the tenter oven was improved.

From the results of Example 2 and Example 4, it was understood that the total amount of air exhausted from the exhaust mechanisms was set to be greater than the air volume blown out from the blowoff nozzle, so that the effect of improving temperature unevenness of the tenter oven was increased.

From the results of Example 3 and Example 4, it was understood that the air blown out of the blowoff nozzle was tilted to the upstream side of the MD flow, so that the effect of improving temperature unevenness of the tenter oven was increased.

### Industrial Applicability

The airflow control apparatus and the method for manufacturing a stretched film of the present invention can reduce temperature unevenness of the film and manufacture a thermoplastic film having uniform characteristics and thickness of the film in the width direction, can also reduce energy consumption required for keeping a temperature in heating the film to a desired temperature, and is useful in restraining the hot air in the tenter oven being blown out to the outside to deteriorate the working environment around the tenter oven or reduce the productivity of the film.

### Reference Signs List

1 FILM MANUFACTURING APPARATUS
2 AIRFLOW CONTROL APPARATUS
3 TENTER OVEN
4 CONNECTING SECTION
11, 22, 31, 32, 33, 34, 35 BLOWOFF NOZZLE
20 BOX-SHAPED BODY
50 OUTER SPACE
61 OUTER BOUNDARY
62 INNER BOUNDARY
100 FILM
111, 222 OPENING PORTION
B1, B2, B3, B4 BLOWER
D111, D112, D131, D132, D133, D221, D222, D241, D242, D243 DUCT
E11, E12, E21, E22, E31, E32, E33, E34, E35, E36 EXHAUST MECHANISM
H1, H2 HEAT EXCHANGER
FR FILM CONVEYANCE DIRECTION

## Claims

1. An airflow control apparatus that is provided adjacent to an upstream side of an entrance of a tenter oven in a film conveyance direction and/or to a downstream side of an exit of the tenter oven in the film conveyance direction, the tenter oven including the entrance into which a film is conveyed and the exit from which the film is conveyed, the airflow control apparatus comprising:
inside the airflow control apparatus,
at least one pair of blowoff nozzles configured to blow out air to the film being conveyed, the one pair of blowoff nozzles facing each other with a film passing surface sandwiched between the one pair of blowoff nozzles;
at least one pair of upstream-side exhaust mechanisms configured to exhaust the air inside the airflow control apparatus, the one pair of upstream-side exhaust mechanisms being provided on the upstream side in the film conveyance direction with respect to the one pair of blowoff nozzles to face each other with the film passing surface sandwiched between the one pair of upstream-side exhaust mechanisms; and
at least one pair of downstream-side exhaust mechanisms configured to exhaust the air inside the airflow control apparatus, the one pair of downstream-side exhaust mechanisms being provided on the downstream side in the film conveyance direction with respect to the one pair of blowoff nozzles to face each other with the film passing surface sandwiched between the one pair of downstream-side exhaust mechanisms,
wherein the upstream-side exhaust mechanisms and the downstream-side exhaust mechanisms are set such that,
when an airflow flowing from the upstream side toward the downstream side in the film conveyance direction or from the downstream side toward the upstream side in the film conveyance direction inside the airflow control apparatus while exhaust of air from the upstream-side exhaust mechanisms and the downstream-side exhaust mechanisms and blowoff of air from the blowoff nozzle are stopped is an airflow when stopping,
each of an amount of air exhausted from the upstream-side exhaust mechanisms and an amount of air exhausted from the downstream-side exhaust mechanisms is greater than zero, and
the amount of air exhausted from the exhaust mechanisms positioned on a side into which the airflow when stopping flows, of the upstream-side exhaust mechanisms and the downstream-side exhaust mechanisms, is greater than the amount of air exhausted from the other exhaust mechanisms.

2. The airflow control apparatus according to claim 1,
wherein the upstream-side exhaust mechanisms and the downstream-side exhaust mechanisms are adjusted such that a total amount of air exhausted from the upstream-side exhaust mechanisms and the downstream-side exhaust mechanisms is greater than an amount blown out from the blowoff nozzle.

3. The airflow control apparatus according to claim 1,
wherein the blowoff nozzles are configured to blow out the air in a direction tilted toward the side into which the airflow when stopping flows, with respect to a direction perpendicular to the film passing surface from the blowoff nozzles.

4. The airflow control apparatus according to claim 3,
wherein the blowoff nozzles include a mechanism configured to adjust a blowoff direction of the air.

5. A method for manufacturing a stretched film, the method comprising:
passing a film through each of a tenter oven and an airflow control apparatus according to any one of claims 1 to 4, the airflow control apparatus being provided adjacent to an upstream side of an entrance of the tenter oven in a film conveyance direction and/or to a downstream side of an exit of the tenter oven in the film conveyance direction;
at the airflow control apparatus, exhausting air in the airflow control apparatus with the upstream-side exhaust mechanisms and the downstream-side exhaust mechanisms while blowing air toward a running film from the blowoff nozzles; and
at the tenter oven, heating and stretching the running film.
